## Europäisches Patentamt

## European Patent Office

## Office européen des brevets

(11) Veröffentlichungsnummer: **0 352 873**
**A2**

# (12) EUROPÄISCHE PATENTANMELDUNG

(21) Anmeldenummer: **89250007.5**

(22) Anmeldetag: **26.07.89**

(51) Int. Cl.⁴: **B60C 27/20**

(30) Priorität: **26.07.88 DE 3825745**

(43) Veröffentlichungstag der Anmeldung:
**31.01.90 Patentblatt 90/05**

(84) Benannte Vertragsstaaten:
**AT CH DE FR GB IT LI SE**

(71) Anmelder: **RUD-Kettenfabrik Rieger & Dietz GmbH u. Co.**
**Friedensinsel**
**D-7080 Aalen 1(DE)**

(72) Erfinder: **Rieger, Hansjörg, Dr.-Ing.**
**Saarstr. 48**
**D-7080 Aalen(DE)**
Erfinder: **Müller, Anton, Dipl.-Ing.(FH)**
**Brandsweg 9**
**D-7080 Aalen-Unterkochen(DE)**
Erfinder: **Zeiser, Peter, Dipl.-Ing.**
**Eckener Höhe 1**
**D-7080 Aalen-Wasseralfingen(DE)**
Erfinder: **Der weitere Erfinder hat auf seine Nennung verzichtet**

(74) Vertreter: **Böning, Manfred, Dr. Ing. et al**
**Patentanwälte Dipl.-Ing. Dieter Jander Dr. Ing. Manfred Böning Kurfürstendamm 66**
**D-1000 Berlin 15(DE)**

(54) **Gleitschutzvorrichtung für Fahrzeugräder.**

(57) Bei einer Gleitschutzvorrichtung für Fahrzeugräder mit einem die Lauffläche des Fahrzeugreifens im montierten Zustand umschließenden Gleitschutzgürtel ist dieser mit mindestens einer Längenänderungsvorrichtung (65) versehen, die die Gewähr für seine satte und einwandfreie Anlage gegen die Lauffläche des Fahrzeugreifens bietet und die entweder leicht von Hand betätigbar ist oder aber ihre Funktion automatisch erfüllt.

Fig 8

## Gleitschutzvorrichtung für Fahrzeugräder

Die Erfindung betrifft eine Gleitschutzvorrichtung für Fahrzeugräder mit einem im montierten Zustand die Lauffläche des Fahrzeugreifens umschließenden, hinsichtlich seiner Umfangslänge an Fahrzeugreifen eines vorgegebenen Durchmesserbereiches anpaßbaren Gleitschutzgürtel, der durch Abstandshalter im Abstand voneinander gehaltene, in Reifenumfangsrichtung nebeneinander verlaufende Laufnetzstrangabschnitte aufweist.

Eine Gleitschutzvorrichtung der vorstehenden Art ist aus dem DE-GM 87 09 545 bekannt. Sie besitzt einen Gleitschutzgürtel, der aus Paaren parallel nebeneinander, im Bereich der Reifenschultern in Radumfangsrichtung verlaufender Kettenstrangabschnitte und aus über den Reifenumfang verteilten, Abstandshalter für diese Kettenstrangabschnitte bildenden Gleitschutzelementen besteht. Die Gleitschutzelemente sind mit Haken versehen, in die die Enden der parallelen Kettenstrangabschnitte eingehängt sind. Um eine befriedigende Anlage des geschlossenen Gleitschutzgürtels auch an Reifen mit in gewissen Grenzen voneinander abweichenden Umfangslängen zu sichern, lassen sich bei der bekannten Gleitschutzvorrichtung anstelle der Endglieder zweier benachbarter Kettenstrangabschnitte beispielsweise deren vorletzte Glieder in ein Hakenpaar mindestens eines der Gleitschutzelemente einhängen und dort durch Steilgewindeschrauben arretieren. Diese Anpassung des Gleitschutzgürtels an den Reifenumfang ist allerdings nur vor der Montage der Gleitschutzvorrichtung möglich und erfordert darüber hinaus ein gewisses Geschick und technisches Verständnis.

Der Erfindung liegt die Aufgabe zugrunde, eine Gleitschutzvorrichtung der in Betracht gezogenen Art zu schaffen, bei der die Anpassung des Gleitschutzgürtels an den Reifenumfang nach oder im Zuge der Montage erfolgen und auch von Ungeübten problemlos durchgeführt werden kann.

Die vorstehende Aufgabe wird bei einer gattungsgemäßen Gleitschutzvorrichtung erfindungsgemäß dadurch gelöst, daß mindestens einem Abstandshalter eine von der Außenseite betätigbare Längenänderungsvorrichtung für den Gleitschutzgürtel zugeordnet ist.

Die erfindungsgemäße Gleitschutzvorrichtung bietet den Vorteil, daß die Längeneinstellung ihres Gleitschutzgürtels auch von Ungeübten ohne Schwierigkeit durchgeführt werden kann und die Gewähr dafür gegeben ist, daß sich der Gleitschutzgürtel der Gleitschutzvorrichtung satt und einwandfrei gegen die Lauffläche des Fahrzeugreifens anlegt, ohne daß der Montage vorausgehende Anpassungsarbeiten an die Reifengröße vonnöten sind, die unter Umständen mehrere Montagevorgänge erforderlich machen.

Als besonders vorteilhaft erweist es sich, wenn eine Längenänderungsvorrichtung von Teilen mindestens eines Abstandshalters gebildete Befestigungselemente für Laufnetzstrangabschnitte aufweist. Die Befestigungselemente können dabei entweder in der Reifenumfangsrichtung oder quer zur Reifenumfangsrichtung verstellbar sein, wobei eine Verstellung in Reifenumfangsrichtung die grundsätzlich erstrebenswerte parallele Anordnung der Laufnetzstrangabschnitte nicht beeinträchtigt.

Um den Sitz der an den Reifenumfang angepaßten Gleitschutzvorrichtung sicherzustellen, sollte jede Längenänderungsvorrichtung mindestens ein Verriegelungsorgan zu ihrer Arretierung in der jeweils eingestellten Lage aufweisen.

Die regelmäßig aus Kettengliedern bestehenden Laufnetzstrangabschnitte können vorzugsweise über als Haken oder Lochplatten ausgebildete Befestigungselemente mit jeweils einem Abstandshalter verbunden sein. Die Verbindung kann unmittelbar erfolgen oder über Zwischenglieder, wie Spannfedern oder Seilzüge. Auch ein direkter Anschluß der Laufnetzstrangabschnitte an Spannfedern ist möglich. Als sehr vorteilhaft hat sich eine Lösung erwiesen, bei der als Gabeln ausgebildete Abstandshalter Verwendung finden, wobei auf die Zinken der aus Federstahl bestehenden Gabeln die Endglieder von Laufnetzstrangabschnitten aufgefädelt sind.

Zum Verstellen, d.h. zum Verkürzen bzw. Spannen des Gleitschutzgürtels lassen sich unterschiedliche Spann-und Verstellelemente verwenden. Diese Spann- und Verstellelemente können vom Benutzer nach der Montage der Gleitschutzvorrichtung betätigt werden.

Als besonders komfortabel erweist sich eine Gleitschutzvorrichtung, bei der das Verkürzen des Gleitschutzgürtels automatisch erfolgt, indem während des Aufziehens des Gleitschutzgürtels ein Auslöser die automatische Betätigung der Längenänderungsvorrichtung einleitet, sobald der Auslöser am Schluß des Montagevorganges gegen die Reifenschulter oder die Reifenflanke zur Anlage kommt und von dieser aus einer Ruheposition in eine Auslöseposition gedrückt wird.

Weitere Einzelheiten und Merkmale der Erfindung ergeben sich aus den Unteransprüchen und der nachstehenden Beschreibung diverser in der beigefügten Zeichnung dargestellter vorteilhafter Ausführungsbeispiele. Es zeigen:

Fig. 1 eine Gleitschutzvorrichtung mit einer zum Verkürzen ihres Gleitschutzgürtels dienenden ersten Längenänderungsvorrichtung,

Fig. 2 eine Gleitschutzvorrichtung mit einer zweiten Längenänderungsvorrichtung,

Fig. 3 eine Gleitschutzvorrichtung mit einer durch knopfdruck betätigbaren dritten Längenänderungsvorrichtung,

Fig. 4 eine Gleitschutzvorrichtung mit einer Längenänderungsvorrichtung, die eine als Abstandshalter dienende federelastische Gabel aufweist,

Fig. 5 eine Gleitschutzvorrichtung mit einer ein Gelenkviereck aufweisenden Längenänderungsvorrichtung,

Fig. 6 eine Gleitschutzvorrichtung mit einer einen Schwenkbügel aufweisenden Längenänderungsvorrichtung,

Fig. 7 Einzelheiten einer Längenänderungsvorrichtung mit einem Verstellorgan, das keilförmige Stellkurven für Haken zum Einhängen der Endglieder von Laufnetzstrangabschnitten aufweist,

Fig. 8 Einzelheiten einer modifizierten Längenänderungsvorrichtung, deren mit keilförmigen Stellkurven versehene Verstellorgane durch eine Feder betätigbar sind,

Fig. 9 Einzelheiten einer Längenänderungsvorrichtung, bei der parallele Laufnetzstrangabschnitte über Spannfedern mit einem Abstandshalter verbunden sind,

Fig. 10 Einzelheiten einer Längenänderungsvorrichtung, bei der parallele Laufnetzstränge eines Gleitschutzgürtels über Seilzüge mit einem Exzenter verbunden sind, der von einem Schneckenrad eines durch eine Schnecke antreibbaren Schneckengetriebes gebildet wird,

Fig. 11 einen Auslösemechanismus zum Einleiten eines automatischen Verkürzungs- bzw. Spannvorganges, wie er beispielsweise beim Einsatz einer Längenänderungsvorrichtung der in Fig. 8 dargestellten Art verwendet werden kann,

Fig. 12 eine Gleitschutzvorrichtung mit einer Längenänderungsvorrichtung, durch die Laufnetzstrangabschnitte des Gleitschutzgürtels quer zur Laufrichtung verlagerbar sind,

Fig. 13 Einzelheiten der bei XIII in Fig. 11 dargestellten Längenänderungsvorrichtung in vergrößertem Maßstab,

Fig. 14 eine Stirnansicht der Längenänderungsvorrichtung gemäß Fig. 12 und

Fig. 15 ein weiteres Ausführungsbeispiel mit einer zwischen zwei Abstandshaltern angeordneten Längenänderungsvorrichtung, durch die ebenfalls eine Verlagerung von Laufnetzstrangabschnitten des Gleitschutzgürtels quer zur Laufrichtung möglich ist.

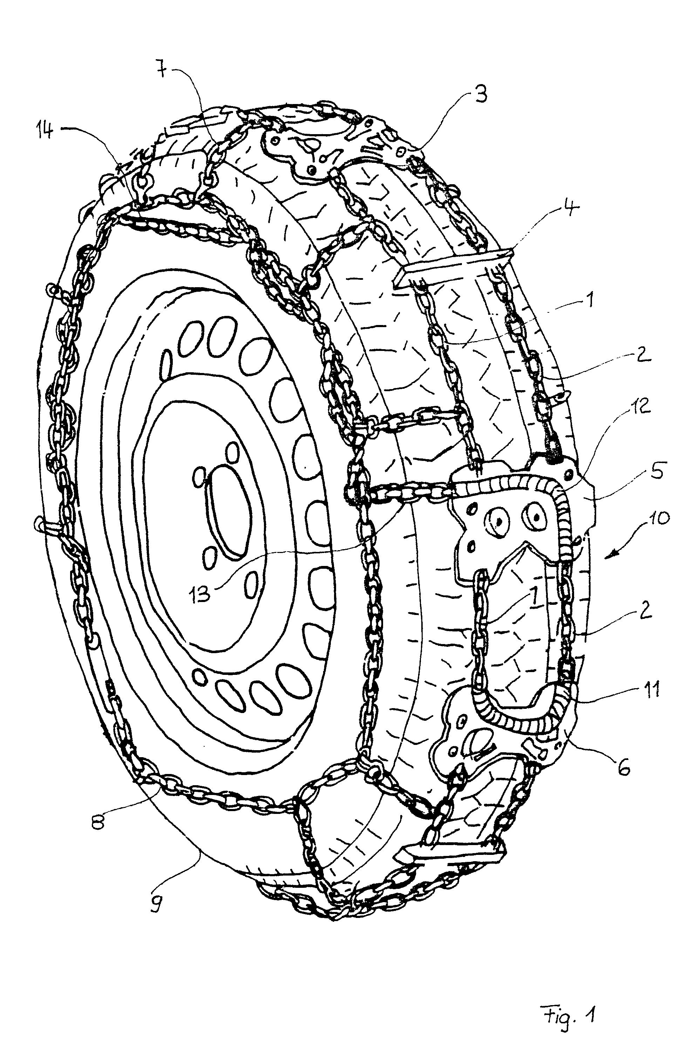

In Fig. 1 ist eine Gleitschutzvorrichtung mit einem Gleitschutzgürtel dargestellt, der aus im Abstand voneinander, parallel oder zumindest im wesentlichen parallel zueinander verlaufenden Laufnetzstrangabschnitten 1 und 2 sowie Abstandshaltern 3,4,5 und 6 unterschiedlicher Art besteht. Die parallelen Laufnetzstrangabschnitte 1 und 2 bieten die Gewähr für gute Spurführungseigenschaften der Gleitschutzvorrichtung, während die Abstandshalter 3,4,5 und 6, die ebenfalls als Gleitschutzelemente ausgebildet sind, ausreichende Vortriebseigenschaften sichern. Der Gleitschutzgürtel der Gleitschutzvorrichtung gemäß Fig. 1 ist über Querketten 7 an einer von einer geschlossenen Seitenkette gebildeten äußeren Halterung 8 aufgehängt. Anstelle einer Seitenkette könnten auch ein geschlossener Ring oder ein Stahlseil Verwendung finden. Die nicht dargestellte innere Halterung wird vorzugsweise von einem Federstahlbügel gebildet. Um die Gleitschutzvorrichtung an den Umfang des Fahrzeugreifens 9 anpassen zu können, ist sie mit einer Längenänderungsvorrichtung 10 versehen, zu der Abstandshalter 5,6 sowie Laufnetzstrangabschnitte 1' und 2' gehören, welche Teile eines durch Führungskanäle 11 und 12 geführten Spannstranges 13 formen, dessen Ende 14 an der äußeren Halterung 8 verwahrt ist.

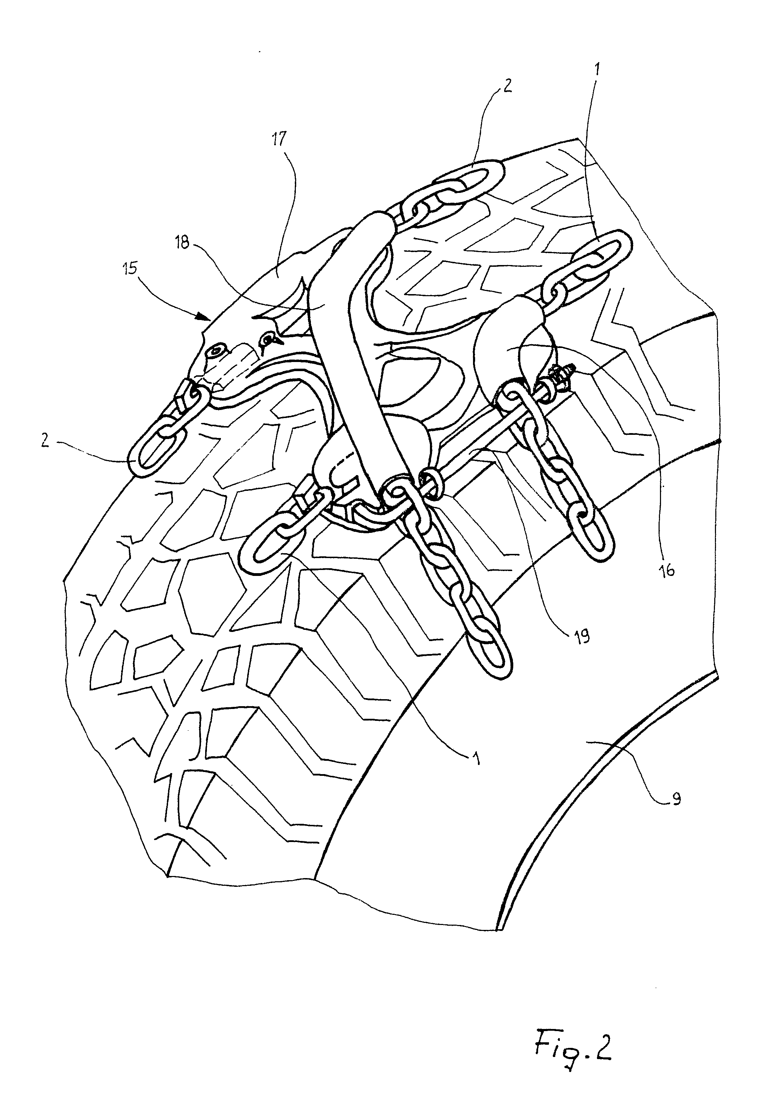

Während bei der Längenänderungsvorrichtung gemäß Fig. 1 eine doppelte Umlenkung des von den Laufnetzstrangabschnitten 1' und 2' gebildeten Spannstranges 13 erfolgt, werden bei der Längenänderungsvorrichtung 15 gemäß Fig. 2 die Enden zweier Laufnetzstrangabschnitte 1 und 2 in einem Abstandshalter 16 lediglich einmal umgelenkt, und zwar mittels zweier Führungskanäle 17 und 18. Zur Verriegelung der zum Spannen genutzten Enden der Laufnetzstrangabschnitte 1 und 2 in der jeweils verkürzten Position des Gleitschutzgürtels dient ein Verriegelungselement 19, das jeweils zwei Kettenglieder der Laufnetzstrangabschnitte 1 und 2 passiert.

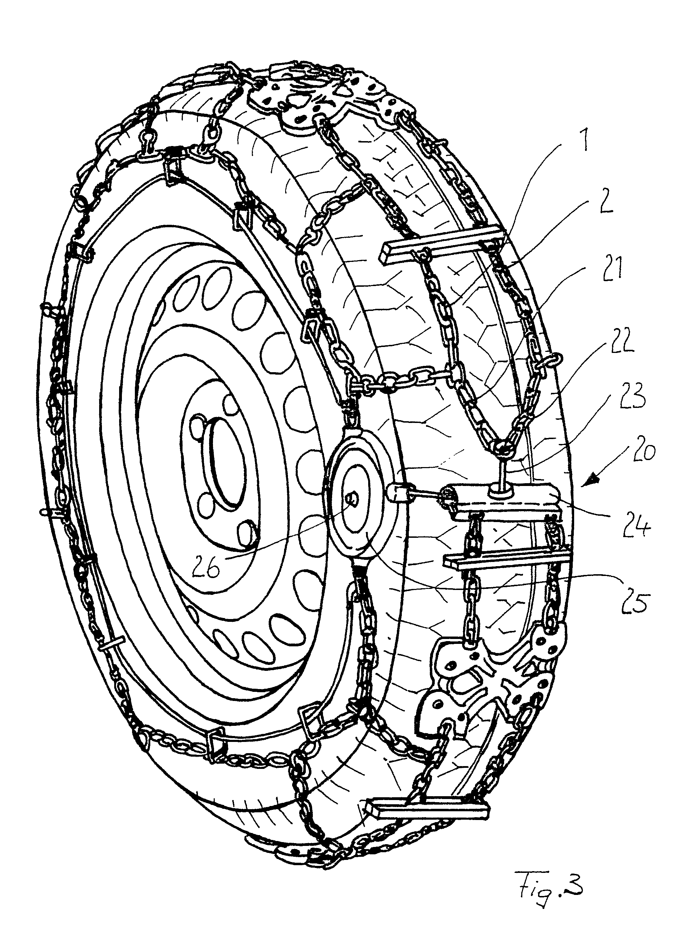

In Fig. 3 ist eine Gleitschutzvorrichtung mit einer Längenänderungsvorrichtung 20 gezeigt, bei der die V-förmig zusammengeführten Enden 21 und 22 zweier Laufnetzstrangabschnitte 1 und 2 über einen Seilzug 23, der in einem Abstandshalter 24 umgelenkt wird, mit einer Aufwickelvorrichtung 25 verbunden sind. Im Innern der Aufwickelvorrichtung 25 befindet sich eine Spiralfeder, die nach Betätigen eines Knopfes 26 den Seilzug 23 in die Aufwickelvorrichtung 25 zieht und so den Gleitschutzgürtel verkürzt bzw. spannt. Die Aufwickelvorrichtung ist mit einer nicht dargestellten Sperrklinkenanordnung versehen, die auch bei Auftreten hoher Fliehkräfte eine ungewollte Lockerung des Gleitschutzgürtels verhindert. Selbstverständlich ist es möglich, die Gleitschutzvorrichtung statt mit einer Aufwickelvorrichtung mit mehreren Aufwickelvorrichtungen zu versehen. Günstiger als der Einsatz mehrerer Aufwickelvorrichtungen erweist sich jedoch insbesondere bei Gleitschutzvorrichtungen mit zentralen Teilen aufweisenden Halterungen die Verwendung einer ebenfalls zentral angeordneten Aufwickelvorrichtung, die den Gleitschutzgürtel gleichzeitig an mehreren Stellen spannt bzw. verkürzt.

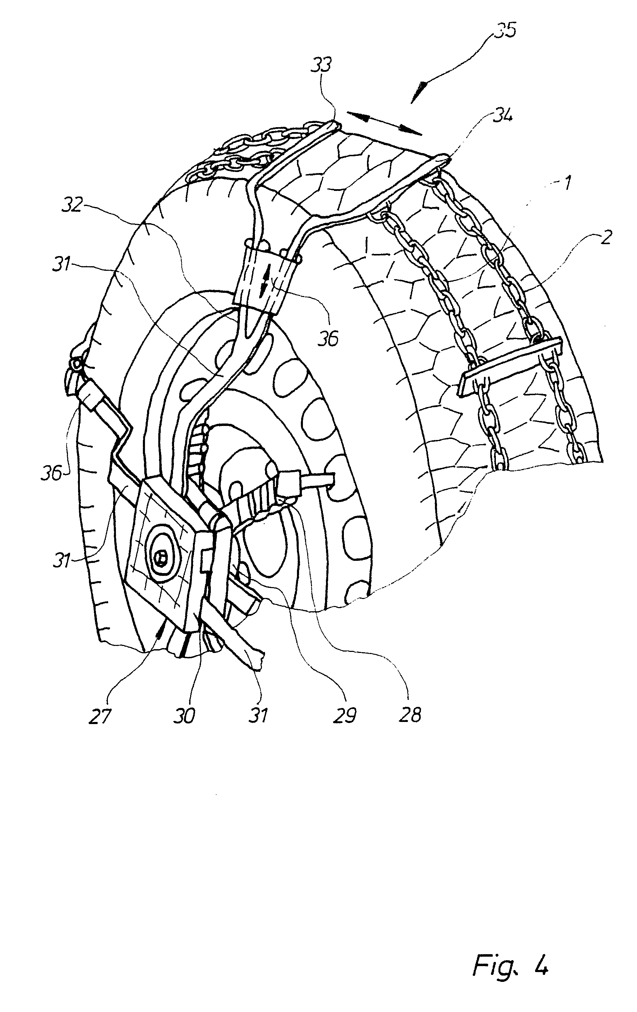

In Fig. 4 ist eine Gleitschutzvorrichtung dargestellt, bei der einige Abstandshalter zu einer an der Außenseite des Fahrzeugrades befestigbaren Halterung für den Gleitschutzgürtel gehören. Die allgemein mit 27 bezeichnete Halterung besitzt ein fest über Spannorgane 28 mit der Felge des Fahrzeugrades verbindbares Lager 29 für einen drehbaren Tragkörper 30, der eine Aufnahme für in ihm hin- und herverschiebbar gelagerte Tragarme 31 formt. Die Enden der Tragarme 31 bilden gabelförmig ausgebildete Abstandshalter 32 mit federelastischen Zinken 33 und 34, die Teile einer Längenänderungsvorrichtung 35 bilden, die einen auf den Zinken gelagerten Schieber 36 aufweist, der zum Verkürzen des Gleitschutzgürtels dient. Die Schieber 36 sind entweder einzeln von Hand durch den Benutzer oder aber durch einen nicht dargestellten zentralen Verstellmechanismus betätigbar, der sämtliche Schieber mehr oder weniger weit gleichzeitig nach innen oder außen bewegt. Auch hier sind die Schieber oder der zentrale Stellmechanismus mit Verriegelungselementen versehen.

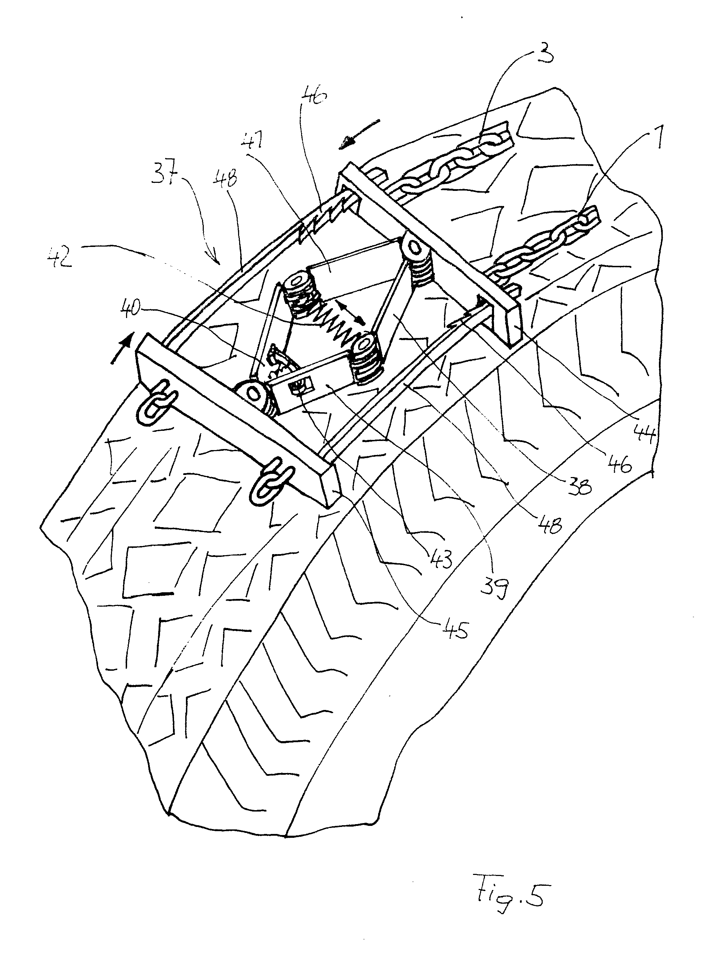

Fig. 5 zeigt eine allgemein mit 37 bezeichnete Längenänderungsvorrichtung mit einem Gelenkviereck, dessen Elemente 38,39,40,41 eine Druckfeder 42 zu spreizen suchen, sobald ein Rasthaken 43 aus der in der Zeichnung dargestellten Raststellung entfernt wird. Beim Spreizen des Gelenkvierecks nähern sich die Querbalken 44 und 45, wobei die mit Verzahnungen 46 versehenen Blattfedern 47 und 48 den Gleitschutzgürtel in der verkürzten Lage arretieren.

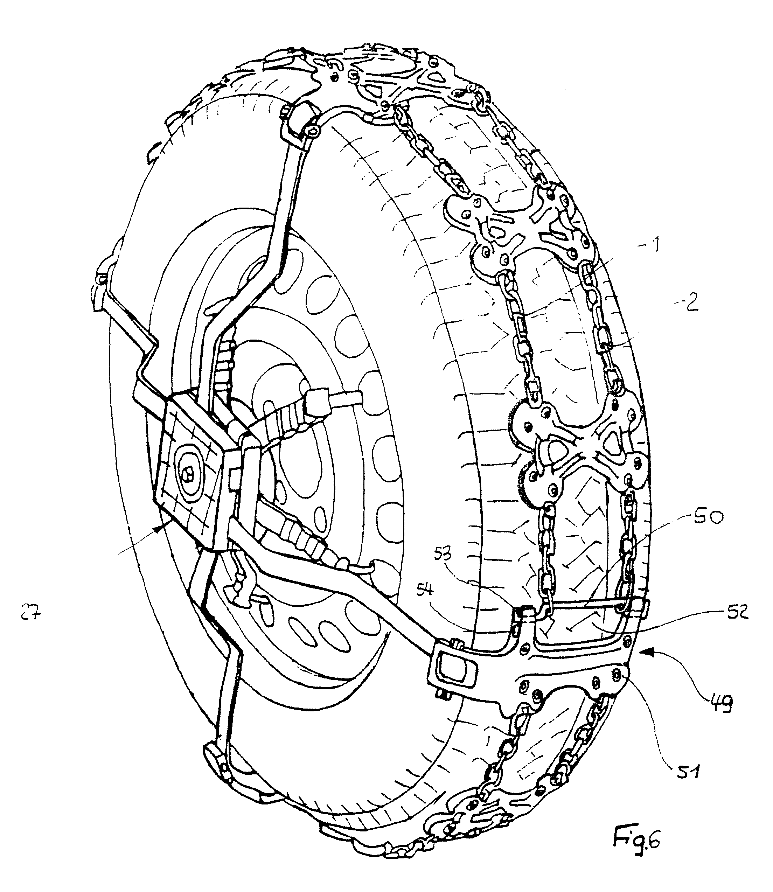

Eine Gleitschutzvorrichtung mit einer Längenänderungsvorrichtung 49, welche mit einem als Schwenkbügel 50 ausgebildeten Verstellorgan versehen ist, zeigt die Fig. 6. Die Gleitschutzvorrichtung gemäß Fig. 5 weist wie die Gleitschutzvorrichtung gemäß Fig. 4 eine zentrale Halterung 27 auf. Der in Bohrungen des Abstandshalters 51 geführte Schwenkbügel kann aus der in der Zeichnung dargestellten Position durch eine Schwenkbewegung im Uhrzeigersinn in eine zweite Position geschwenkt werden, in der er in die Aussparung 52 geklappt ist. Ein zur Einleitung der Schwenkbewegung dienender Schwenkhebel 53 rastet in beiden Positionen in ihm zugeordnete Rastnuten 54 am Abstandshalter 51 ein.

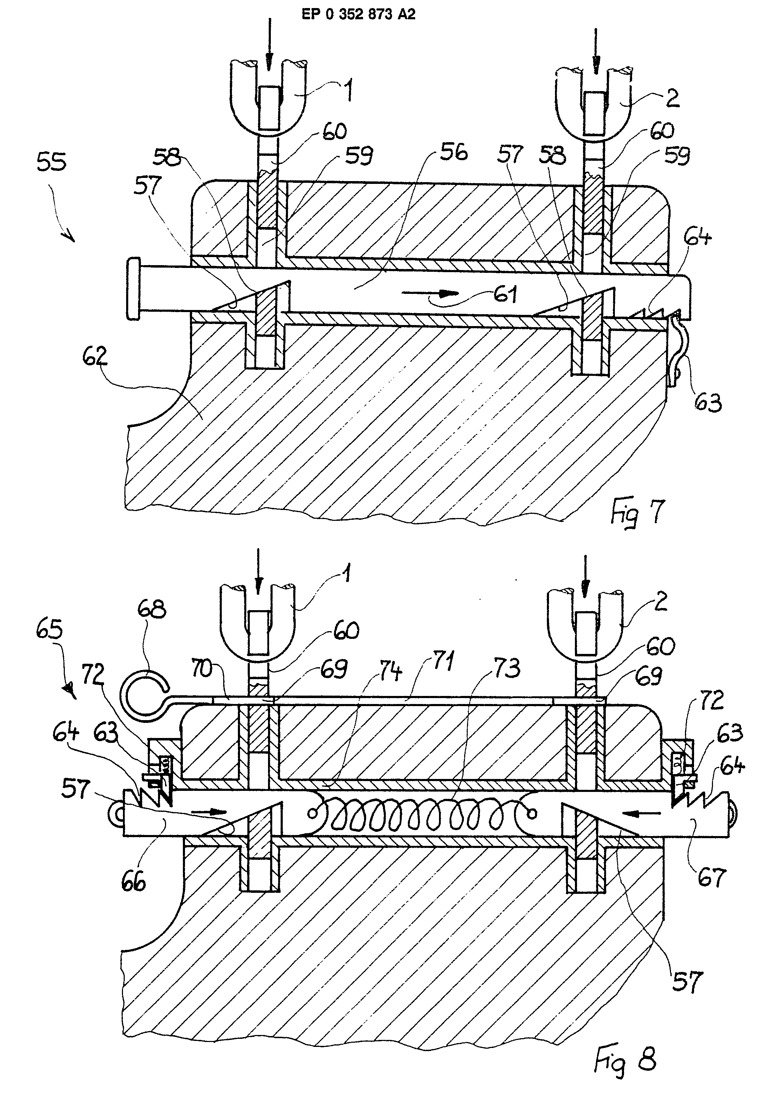

Die Fig. 7 zeigt die wesentlichen Teile einer Längenänderungsvorrichtung 55, bei der das zum Verkürzen der Laufnetzstrangabschnitte 1 und 2 dienende Verstellorgan von einem Schieber 56 mit Stellkurven 57 gebildet wird. Die Stellkurven 57 wirken mit Anschlagflächen 58 zusammen, die von jeweils einer Wand eines Längsschlitzes 59 jeweils eines Hakens 60 gebildet werden, in dem die Endglieder der Laufnetzstrangabschnitte 1 und 2 eingehängt sind. Zum Verkürzen des Gleitschutzgürtels wird der Schieber 56 in Richtung des Pfeiles 61 in den Abstandshalter 62 gedrückt. Ein von einer Feder gebildetes Verriegelungsorgan 63 wirkt mit einem Sägezahnabschnitt 64 zusammen und bildet eine Rücklaufsperre für den Schieber 56.

Während die Längenänderungsvorrichtung 55 in Fig. 7 ein einzelnes Verstellorgan aufweist, werden bei der Längenänderungsvorrichtung 65 gemäß Fig. 8 zwei von Schiebern 66, 67 gebildete Verstellorgane verwendet, die wiederum mit keilförmigen Stellkurven 57 versehen sind. Um einen mit der Längenänderungsvorrichtung 65 versehenen Gleitschutzgürtel zu verkürzen, muß ein Auslöser 68 betätigt werden, der mit in Bohrungen der Haken 60 greifenden Sperrfingern 69 versehen ist, die von den Enden einer Gabel mit ungleich langen Zinken 70 und 71 gebildet werden. Es ist möglich, den Auslöser 68 von Hand zu betätigen oder aber ihn mit einem automatischen Auslösemechanismus der weiter unten beschriebenen Art zu kombinieren. Auch die Längenänderungsvorrichtung 65 ist mit Verriegelungsorganen 63 versehen, die in Sägezahnabschnitte 64 greifen, und zwar unter der Einwirkung von Federn 72. Nach dem Betätigen des Auslösers 68 zieht eine von einer Zugfeder gebildete Spannfeder 73 die Schieber 66 und 67 in das Innere einer Führung 74, bis der Gleitschutzgürtel einwandfrei an der Lauffläche des Fahrzeugreifens anliegt.

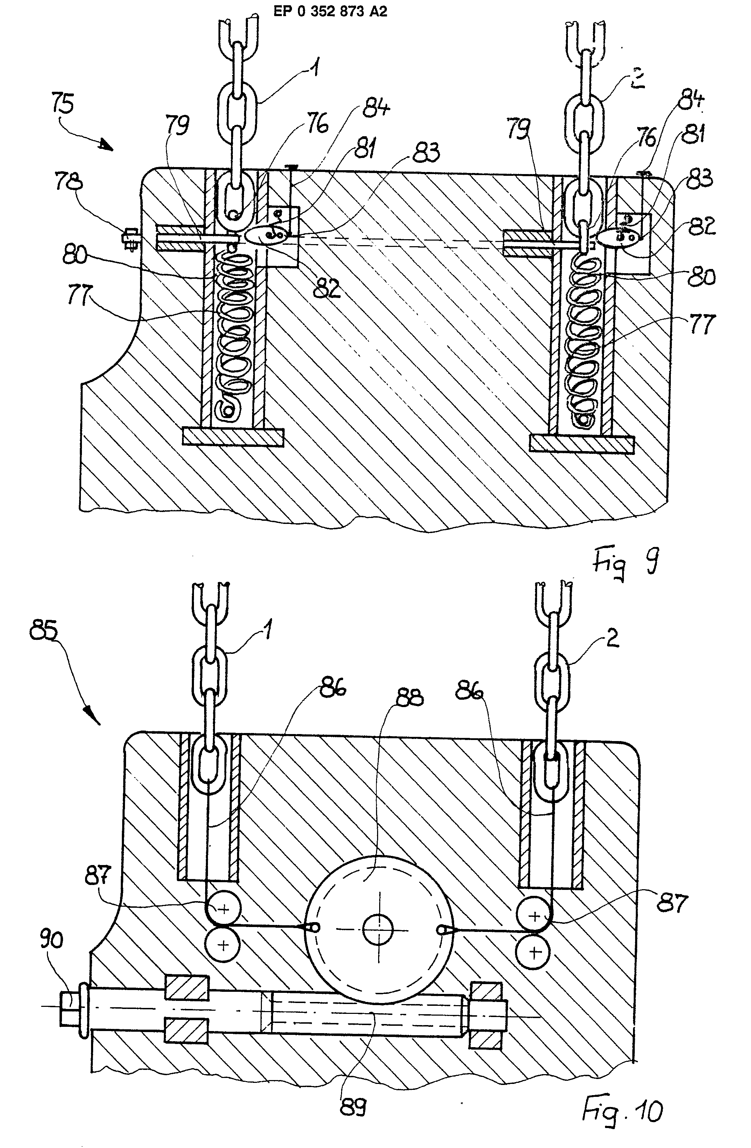

Bei der Längenänderungsvorrichtung 75 gemäß Fig. 9 sind die Endglieder der Laufnetzstrangabschnitte 1 und 2 unmittelbar in die Ösen 76 von als Zugfedern ausgebildeten Spannfedern 77 eingehängt. Um den Gleitschutzgürtel zu verkürzen, bedarf es der Betätigung eines Auslösers 78 durch den Benutzer der Gleitschutzvorrichtung oder durch die Gleitschutzvorrichtung selbst. Der auch in diesem Falle wiederum gabelartig ausgebildete Auslöser greift mit Sperrfingern 79 in die Ösen 76. Bei seiner Betätigung werden die Sperrfinger 79 - in Fig. 9 betrachtet - gemeinsam translatorisch um einen Betrag nach links verlagert, bis sie die Führungskanäle 80 für die Spannfedern 77 und die Laufnetzstrangabschnitte 1 und 2 freigeben. Die Spannfedern 77 ziehen danach die Endglieder der Laufnetzstrangabschnitte 1 und 2 in das Innere der Führungskanäle 80. Die Endglieder passieren dabei unter der Wirkung von Federn 81 stehende Verriegelungsorgane 82, wobei sie die Verriegelungsorgane 82 gegen die Wirkung der Federn 81 entgegen dem Uhrzeigersinn schwenken. Sobald die Verriegelungsorgane 82 das Endglied passiert haben, drücken die Federn 81 sie in die dargestellte Lage zurück und verriegeln auf diese Weise das Endglied in der erreichten Position. Um die Laufnetzstrangabschnitte 1 und 2 in die gezeigte Lage zurückführen zu können, greifen an Ösen 83 der Verriegelungsorgane 82 von außen betätigbare Rückstellorgane 84 an, die aus kurzen, an ihren Enden mit Knöpfen versehenen Seilabschnitten bestehen können.

Fig. 10 zeigt eine Längenänderungsvorrichtung 85, mit deren Hilfe wiederum zwei parallel geführte Laufnetzstrangabschnitte 1 und 2 in Reifenumfangsrichtung verkürzbar sind. Die Endglieder der Laufnetzstrangabschnitte 1 und 2 sind hier über Seilzüge 86, welche Umlenkrollen 87 passieren, mit einem Spannexzenter 88 verbunden, der als Schneckenrad ausgebildet ist, zu dessen Antrieb ein als Schnecke 89 ausgebildetes Verstellorgan dient. Durch eine selbsthemmende Ausbildung des Schneckengetriebes erübrigen sich zusätzliche Verriegelungsorgane. Der Antrieb der Schnecke 89 kann von außen über ein Vierkant 90 erfolgen. Anstelle des Vierkantes 90 ließe sich auch ein Zahnrad vorsehen, das von einem zentralen Stellmechanismus aus über eine Zahnstange in Drehbewegung versetzbar ist.

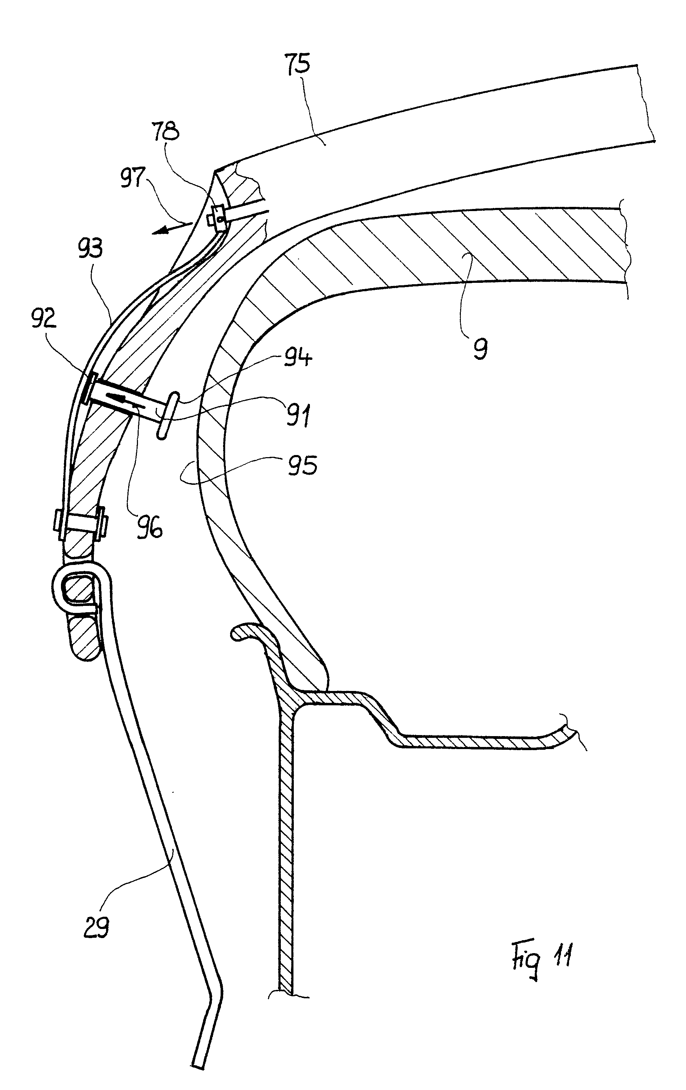

Wie weiter oben bereits dargelegt, lassen sich die Längenänderungsvorrichtungen entweder von Hand oder aber mehr oder weniger automatisch betätigen. Eine automatische Auslösung des Verkürzungs- bzw. Spannvorganges ist insbesondere bei Gleitschutzvorrichtungen möglich, die, wie die in den Figuren 4 und 6 dargestellten Konstruktionen, über eine zentrale Halterung verfügen und bei der mindestens zwei zur Halterung gehörende Abstandshalter einen nach der Befestigung der Halterung am Fahrzeugrad, außerhalb des Laufflächenbereiches des Reifens verbliebenen Teil des Gleitschutzgürtels bei Einleitung einer Drehbewegung in das Fahrzeugrad auf die Lauffläche des Fahrzeugreifens drücken. Bei derartigen Gleitschutzvorrichtungen kann man, wie in Fig. 11 dargestellt, beispielsweise an einem Abstandshalter 75 einen Auslöser 91 anordnen, dessen eines Ende 92 gegen die Innenseite einer Blattfeder 93 anliegt, deren Ende beispielsweise mit dem Auslöser 78 der Längenänderungsvorrichtung gemäß Fig. 9 verbunden ist.

Sobald in das Fahrzeugrad eine Drehbewegung eingeleitet wird, wird das andere Ende 94 des Auslösers 91 gegen die Flanke 95 des Fahrzeugreifens gedrückt und dabei in Richtung des Pfeiles 96 verschoben. Die Verschiebung des Auslösers 91 bewirkt eine Verschiebung des Auslösers 78 in Richtung des Pfeiles 97, so daß die Spannfedern 77 die mit ihnen verbundenen Laufnetzstrangabschnitte 1 und 2, wie weiter oben beschrieben, verkürzen können.

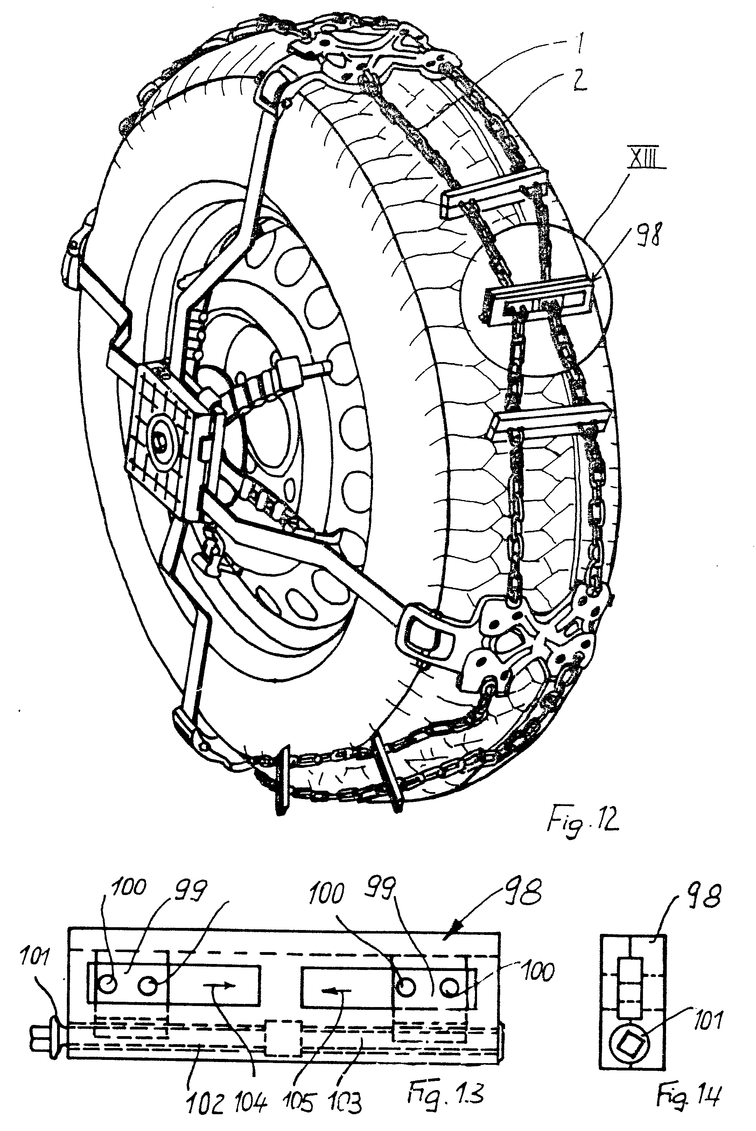

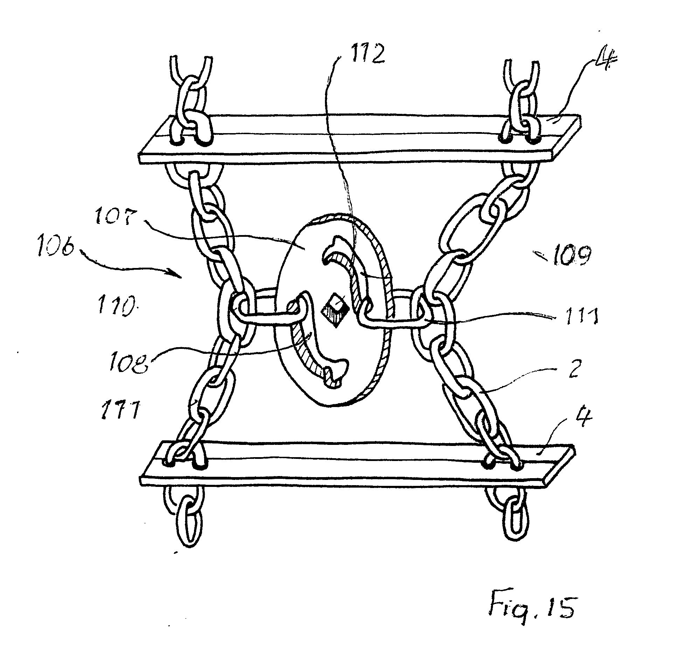

Bei den bisher beschriebenen Gleitschutzvorrichtungen wurden die Laufnetzstrangabschnitte mittels der ihnen zugeordneten Befestigungselemente in Reifenumfangsrichtung verkürzt. In den Fig. 12 - 14 ist demgegenüber eine Gleitschutzvorrichtung dargestellt, bei der in die Laufnetzstrangabschnitte 1 und 2 eine Querbewegung eingeleitet wird, um eine Verkürzung des Gleitschutzgürtels zu bewirken. Die Gleitschutzvorrichtung gemäß Fig. 12 ist zu diesem Zweck mit einem eine Längenänderungsvorrichtung bildenden Abstandshalter versehen, dessen Aufbau sich aus den Fig. 13 und 14 ergibt.

Der Abstandshalter besteht aus zwei längs einer Mittelebene, auf geeignete Weise miteinander verbundenen Teilen. Er bildet Führungen für zwei von Lochplatten 99 geformte Befestigungselemente für zwei parallel zur Lauffläche geführte Kettenglieder, deren Schenkel in Bohrungen 100 der Lochplatte geführt sind. Durch ein Verstellorgan, das als Gewindespindel 101 mit gegenläufigen Gewindeabschnitten 102 und 103 versehen ist, welche in von den Fußteilen der Lochplatten 99 gebildete Gewindesegmente greifen, lassen sich die Lochplatten 99 von außen in Richtung der Pfeile 104 und 105 bzw. zurück verschieben. Durch die Annäherung der Laufnetzstrangabschnitte 1 und 2 erreicht man eine Verkürzung des Gleitschutzgürtels.

Bei dem in Fig. 15 dargestellten Ausführungsbeispiel ist zwischen zwei Abstandshaltern 4 eine Längenänderungsvorrichtung 106 angeordnet, die von einer Exzenterplatte 107 mit zwei spiralförmigen Spannschlitzen 108 und 109 gebildet wird, in die Verbindungsorgane 110 und 111 greifen, welche die Exzenterplatte 107 mit zwei Laufnetzstrangabschnitten 1 und 2 verbinden. Die Fig. 15 zeigt die Verhältnisse nach dem Verkürzen des Gleitschutzgürtels. Durch Drehen der Exzenterplatte 107 im Uhrzeigersinn lassen sich die Laufnetzstrangabschnitte in eine parallele Ausgangs lage zurückführen. In beiden möglichen Endstellungen werden die Verbindungsorgane 110 und 111 durch Rastnuten im Bereich der Enden der Spannschlitze 108 und 109 gehalten. Zur Einleitung der Drehbewegung in die Exzenterplatte 107 kann ein in die Aufnahme 112 einführbarer Vierkantschlüssel verwendet werden.

In den Zeichnungen wurden Gleitschutzvorrichtungen mit nur jeweils einer Längenänderungsvorrichtung dargestellt. Es versteht sich, daß ein und dieselbe Gleitschutzvorrichtung mit mehreren Längenänderungsvorrichtungen ausgestattet sein kann und daß sich durch Kombinationen von Teilen der beschriebenen Längenänderungsvorrichtungen weitere Gestaltungsmöglichkeiten für die Ausbildung modifizierter Längenänderungsvorrichtungen ergeben.

## Ansprüche

1. Gleitschutzvorrichtung für Fahrzeugräder mit einem im montierten Zustand die Lauffläche des Fahrzeugreifens umschließenden, hinsichtlich seiner Umfangslänge an Fahrzeugreifen eines vorgegebenen Durchmesserbereiches anpaßbaren Gleitschutzgürtel, der durch Abstandshalter (4) im Abstand voneinander gehaltene, in Reifenumfangsrichtung nebeneinander verlaufende Laufnetzstrangabschnitte (1,2) aufweist, dadurch gekennzeichnet, daß mindestens einem Abstandshalter eine von der Reifenaußenseite betätigbare Längenänderungsvorrichtung (10,15,20,35,37,49,55,65,75,85,98) für den Gleitschutzgürtel zugeordnet ist.

2. Gleitschutzvorrichtung nach Anspruch 1, dadurch gekennzeichnet, daß sie mindestens eine Längenänderungsvorrichtung (10,15,20,35,37,49,55,65,75,85,98) mit von Teilen mindestens eines Abstandshalters gebildeten Befestigungselementen für Laufnetzstrangabschnitte (1,2) aufweist.

3. Gleitschutzvorrichtung nach Anspruch 2, dadurch gekennzeichnet, daß mindestens ein Teil der Befestigungselemente in Reifenumfangsrichtung verstellbar ist.

4. Gleitschutzvorrichtung nach Anspruch 2 oder 3, dadurch gekennzeichnet, daß mindestens ein Teil der Befestigungselemente quer zur Reifenumfangsrichtung verstellbar ist.

5. Gleitschutzvorrichtung nach einem der Ansprüche 1 bis 4, dadurch gekennzeichnet, daß die Längenänderungsvorrichtung (15,37,55,75) mindestens ein Verriegelungsorgan (19,48,63,82) zu ihrer Arretierung in der jeweils eingestellten Lage aufweist.

6. Gleitschutzvorrichtung nach Anspruch 5, dadurch gekennzeichnet, daß das Verriegelungsorgan (82) durch eine Feder (81) in die Arretierungsstellung gedrückt wird.

7. Gleitschutzvorrichtung nach Anspruch 5 oder 6, dadurch gekennzeichnet, daß das Verriegelungsorgan (19,48,63,82) eine Rücklaufsperre bildet.

8. Gleitschutzvorrichtung nach einem der Ansprüche 1 bis 7, dadurch gekennzeichnet, daß die Laufnetzstrangabschnitte (1,2) aus Kettengliedern bestehen.

9. Gleitschutzvorrichtung nach Anspruch 8, dadurch gekennzeichnet, daß mindestens einige der zwischen aufeinanderfolgenden Abstandshaltern angeordneten Laufnetzstrangabschnitte (1,2) parallel zueinander verlaufen.

10. Gleitschutzvorrichtung nach einem der Ansprüche 1 bis 9, dadurch gekennzeichnet, daß sie Laufnetzstrangabschnitte (1,2) aufweist, die über als Haken (60) ausgebildete Befestigungselemente mit jeweils einer Längenänderungsvorrichtung (55,65) verbunden sind.

11. Gleitschutzvorrichtung nach einem der Ansprüche 1 bis 10, dadurch gekennzeichnet, daß sie Laufnetzstrangabschnitte (1,2) aufweist, die über als Lochplatten (99) ausgebildete Befestigungselemente mit jeweils einer Längenänderungsvorrichtung (98) verbunden sind.

12. Gleitschutzvorrichtung nach einem der Ansprüche 1 bis 11, dadurch gekennzeichnet, daß sie Laufnetzstrangabschnitte (1,2) aufweist, die über als Spannfedern (77) ausgebildete Befestigungselemente mit jeweils einer Längenänderungsvorrichtung (75) verbunden sind.

13. Gleitschutzvorrichtung nach einem der Ansprüche 1 bis 12, dadurch gekennzeichnet, daß sie Laufnetzstrangabschnitte (1,2) aufweist, die über als Seilzüge (86) ausgebildete Befestigungselemente mit jeweils einer Längenänderungsvorrichtung (85) verbunden sind.

14. Gleitschutzvorrichtung nach einem der Ansprüche 1 bis 13, dadurch gekennzeichnet, daß sie Laufnetzstrangabschnitte (1,2) aufweist, die über Zinken (33,34) einer einen Abstandshalter (32) bildenden Gabel mit einer Längenänderungsvorrichtung (35) verbunden sind.

15. Gleitschutzvorrichtung nach Anspruch 14, dadurch gekennzeichnet, daß die Zinken (33,34) aus Federstahl bestehen.

16. Gleitschutzvorrichtung nach einem der Ansprüche 1 bis 15, dadurch gekennzeichnet, daß sie Laufnetzstrangabschnitte (1′,2′) aufweist, die in Führungskanälen (11,12) einer Längenänderungsvorrichtung (10) geführt sind.

17. Gleitschutzvorrichtung nach Anspruch 16, dadurch· gekennzeichnet, daß die Führungskanäle (11,12) Laufnetzstrangabschnitte (1′,2′) von der Lauffläche des Fahrzeugreifens (9) zu dessen Außenflanke hin umlenken.

18. Gleitschutzvorrichtung nach einem der Ansprüche 1 bis 17, dadurch gekennzeichnet, daß mindestens eine Längenänderungsvorrichtung (20,37,65,75) mit mindestens einer zum Verkürzen bzw. Spannen des Gleitschutzgürtels dienenden Spannfeder versehen ist.

19. Gleitschutzvorrichtung nach Anspruch 18, dadurch gekennzeichnet, daß die Spannfeder auf mindestens ein Befestigungselement für mindestens einen Laufnetzstrangabschnitt einwirkt.

20. Gleitschutzvorrichtung nach Anspruch 18, dadurch gekennzeichnet, daß die Spannfeder (73) auf mindestens ein Verstellorgan (66,67) für ein Befestigungsorgan für mindestens einen Laufnetzstrangabschnitt (1,2) einwirkt.

21. Gleitschutzvorrichtung nach einem der Ansprüche 18 bis 20, dadurch gekennzeichnet, daß die Spannfeder Teil eines Aufwickelmechanismus (25) für einen Spannstrang (23) für den Gleitschutzgürtel bildet.

22. Gleitschutzvorrichtung nach einem der Ansprüche 1 bis 21, dadurch gekennzeichnet, daß eine Längenänderungsvorrichtung mit mindestens einem Spannexzenter (88) zum Verkürzen des Gleitschutzgürtels versehen ist.

23. Gleitschutzvorrichtung nach Anspruch 22, dadurch gekennzeichnet, daß der Spannexzenter (88) Zapfen und/oder Ösen zur Befestigung von Laufnetzstrangabschnitten oder Verbindungsorganen (86) für die Laufnetzstrangabschnitte (1,2) aufweist.

24. Gleitschutzvorrichtung nach einem der Ansprüche 1 bis 23, dadurch gekennzeichnet, daß eine Längenänderungsvorrichtung (98) mindestens ein in gegenläufige Richtungen betätigbares Verstellorgan für mindestens ein zur Befestigung eines Laufnetzstrangabschnittes (1,2) dienendes Befestigungselement aufweist.

25. Gleitschutzvorrichtung nach Anspruch 24, dadurch gekennzeichnet, daß das Verstellorgan als Gewindespindel (101) ausgebildet ist.

26. Gleitschutzvorrichtung nach Anspruch 25, dadurch gekennzeichnet, daß die Gewindespindel (101) gegenläufige Gewindeabschnitte (102,103) aufweist.

27. Gleitschutzvorrichtung nach Anspruch 24, dadurch gekennzeichnet, daß das Verstellorgan als Zahnstange oder Schnecke eines Zahntriebes (88,89) ausgebildet ist.

28. Gleitschutzvorrichtung nach Anspruch 24, dadurch gekennzeichnet, daß das Verstellorgan als mit einer Stellkurve (57) versehener Schieber (56) ausgebildet ist.

29. Gleitschutzvorrichtung nach Anspruch 24, dadurch gekennzeichnet, daß das Verstellorgan als Schwenkbügel (50) ausgebildet ist.

30. Gleitschutzvorrichtung nach einem der Ansprüche 1 bis 29, dadurch gekennzeichnet, daß zum Verkürzen des Gleitschutzgürtels ein Gelenkviereck (38,39,40,41) einer Längenänderungsvorrichtung (37) dient.

31. Gleitschutzvorrichtung nach einem der Ansprüche 1 bis 30, dadurch gekennzeichnet, daß mindestens einige Abstandshalter Teile einer an der Außenseite des Fahrzeugrades befestigbaren Halterung (27) für den Gleitschutzgürtel bilden.

32. Gleitschutzvorrichtung nach Anspruch 31, dadurch gekennzeichnet, daß die Halterung mindestens ein fest mit der Felge des Fahrzeugrades verbindbares Lager (29) und mindestens einen gegenüber diesem drehbaren Tragkörper (30) aufweist, mit dem die zur Halterung (27) gehörenden Abstandshalter verbunden sind.

33. Gleitschutzvorrichtung nach Anspruch 32, dadurch gekennzeichnet, daß die beiden zueinander drehbaren Teile ringförmig ausgebildet sind.

34. Gleitschutzvorrichtung nach einem der Ansprüche 31 bis 33, bei der mindestens zwei zur Halterung gehörende Abstandshalter einen nach der Befestigung der Halterung am Fahrzeugrad außerhalb des Laufflächenbereiches des Reifens verbliebenen Teil des Gleitschutzgürtels bei Einleitung einer Drehbewegung in das Fahrzeugrad auf die Lauffläche des Fahrzeugreifens drücken, dadurch gekennzeichnet, daß im Bereich sich während der Einleitung der Drehbewegung in das Fahrzeugrad gegen die Flanke (95) oder Schulter des Fahrzeugreifens (9) anlegender Teile der Halterung ein Auslöser (91) zur automatischen Betätigung der Längenänderungsvorrichtung angeordnet ist.

35. Gleitschutzvorrichtung nach Anspruch 34, dadurch gekennzeichnet, daß der Auslöser (96) an einem Abstandshalter angeordnet ist.

36. Gleitschutzvorrichtung nach einem der Ansprüche 1 bis 35, dadurch gekennzeichnet, daß sie eine Längenänderungsvorrichtung mit einer Exzenterplatte aufweist, die mit zwei Spannschlitzen versehen ist, in die Verbindungsorgane eingreifen, welche die Exzenterplatte mit nebeneinander verlaufenden Laufnetzstrangabschnitten verbinden.

37. Gleitschutzvorrichtung nach einem der Ansprüche 1 bis 36, dadurch gekennzeichnet, daß mindestens eine Längenänderungsvorrichtung (20,98) zwischen zwei Abstandshaltern (4) angeordnet ist.

38. Verfahren zum Verkürzen der Länge eines im montierten Zustand die Lauffläche eines Fahrzeugrades umschließenden Laufnetzes einer Gleitschutzvorrichtung, die durch Abstandshalter im Abstand voneinander gehaltene, in Reifenumfangsrichtung nebeneinander verlaufende Laufnetzstrangabschnitte aufweist, insbesondere einer Gleitschutzvorrichtung nach einem der Ansprüche 1 bis 37, dadurch gekennzeichnet, daß das Verkürzen der Länge des Laufnetzes durch eine Reduzierung des Abstandes zwischen jeweils nebeneinander verlaufenden Laufnetzstrangabschnitten (1,2) erfolgt.

Fig. 1

*Fig.2*

Fig.3

*Fig. 4*

Fig.5

Fig.6

Fig 7

Fig 8

Fig 9

Fig. 10

Fig 11

Fig. 12

Fig. 13

Fig. 14

Fig. 15